# EUROPEAN PATENT APPLICATION

(11) **EP 3 641 147 A1**
(43) Date of publication of application: **22.04.2020**
(21) Application number: 18840603.7
(22) Date of filing: 04.05.2018
(51) Int. Cl.: H04B 7/04, H04W 74/08

(54) **INDICATING AND INFORMATION DETERMINING METHOD AND DEVICE**

(30) Priority: 02.08.2017 CN 201710660453
(71) Applicant: Huawei Technologies Co., Ltd., Longgang District Shenzhen, Guangdong 518129 (CN)
(72) Inventor: HANG, Haicun, Shenzhen Guangdong 518129 (CN); BI, Xiaoyan, Shenzhen Guangdong 518129 (CN); WU, Ye, Shenzhen Guangdong 518129 (CN)
(74) Representative: Körber, Martin Hans
(86) International application number: PCT/CN2018/085592
(87) International publication number: WO 2019/024556

(57) **Abstract**

Embodiments of this application disclose an indication method and apparatus, and an information determining method and apparatus, and relate to the field of communications technologies. An indication method may include: generating indication information, where the indication information is used to indicate a transmit beam set, and a transmit beam in the transmit beam set is used to carry a same piece of DCI; and sending the indication information. The technical solutions may be applied to a scenario in which one or more network devices send DCI to a terminal and the DCI is carried on at least one beam for transmission.

## Description

This application claims priority to Chinese Patent Application No. 201710660453.0, filed with the Chinese Patent Office on August 2, 2017 and entitled "INDICATION METHOD AND APPARATUS, AND INFORMATION DETERMINING METHOD AND APPARATUS", which is incorporated herein by reference in its entirety.

### TECHNICAL FIELD

This application relates to the field of communications technologies, and in particular, to an indication method and apparatus, and an information determining method and apparatus.

### BACKGROUND

Development of a mobile service imposes an increasingly high requirement on a data rate and efficiency in wireless communication. In a 5G or future wireless communications system, a beamforming technology is used to confine energy of a transmitted signal in a beam direction to improve signal sending and receiving efficiency. The beamforming technology can effectively expand a transmission range of a radio signal, and reduce signal interference, thereby achieving higher communication efficiency and obtaining a larger network capacity.

In a communications network in which the beamforming technology is used, a network device may send a same piece of downlink control information (downlink control information, DCI) by using a plurality of beams, to increase a DCI decoding success rate of a terminal. In a coordinated multipoint (coordinated multipoint, CoMP) technology, each of a plurality of network devices may send one or more pieces of DCI to a terminal by using a plurality of beams. A DCI-related design has not been determined for a scenario in which one or more network devices send a plurality of pieces of DCI to a terminal and the DCI is carried on a plurality of beams for transmission.

### SUMMARY

This application provides an indication method and apparatus, and an information determining method and apparatus. The technical solutions may be applied to a scenario in which one or more network devices send DCI to a terminal and the DCI is carried on at least one beam for transmission, for example, applied to a scenario in which a CoMP technology is used.

According to a first aspect, this application provides an indication method and apparatus.

In a possible design, the method may include: generating and sending indication information, where the indication information is used to indicate a transmit beam set, and a transmit beam in the transmit beam set is used to carry a same piece of DCI. The indication information may be used to indicate at least one transmit beam set, and each transmit beam set includes at least one transmit beam. The indication information may be existing configuration information of a transmit beam configured by a network device and subsequently used to send DCI to a terminal, or may be a new message. When the indication information is the new message, the steps of generating and sending the indication information may be performed after a beam alignment procedure is performed and before the network device configures the configuration information of the transmit beam subsequently used to send the DCI to the terminal. Certainly, this is not limited in this application.

Correspondingly, this application provides the indication apparatus, and the apparatus may implement the indication method in the first aspect. For example, the apparatus may be the network device. In a possible design, the apparatus may include a processing unit and a transceiver unit. The processing unit is configured to generate indication information, where the indication information is used to indicate a transmit beam set, and a transmit beam in the transmit beam set is used to carry a same piece of DCI. The transceiver unit is configured to send the indication information.

According to a second aspect, this application provides an indication method and apparatus.

In a possible design, the method may include: generating and sending indication information, where the indication information is used to indicate a transmit beam that carries DCI, the transmit beam indicated in the indication information belongs to at least one transmit beam set, the indication information may be used to indicate at least one transmit beam that carries the DCI, a transmit beam in each transmit beam set is used to carry a same piece of DCI, and each transmit beam set includes at least one transmit beam. A rule for determining which transmit beams belong to one transmit beam set may be preset, for example, preset by using a protocol, or preconfigured by using signaling. Optionally, the indication information may be existing configuration information of a transmit beam configured by a network device and subsequently used to send DCI to a terminal, or configuration information of a transmit beam configured during beam sweeping for carrying a reference signal. This can reduce signaling overheads.

Correspondingly, this application provides the indication apparatus, and the apparatus may implement the indication method in the second aspect. For example, the apparatus may be the network device. In a possible design, the apparatus may include a processing unit and a transceiver unit. The processing unit is configured to generate indication information, where the indication information is used to indicate a transmit beam that carries DCI, the transmit beam indicated in the indication information belongs to at least one transmit beam set, and a transmit beam in each transmit beam set is used to carry a same piece of DCI. The transceiver unit is configured to send the indication information.

According to a third aspect, this application provides an indication method and apparatus.

In a possible design, the method may include: generating and sending indication information, where the indication information is used to indicate a transmit beam that carries DCI and the DCI. In other words, the indication information may be used to indicate which transmit beams are used to send which pieces of DCI, namely, indicate which beams belong to a same transmit beam set. A transmit beam in each transmit beam set is used to carry a same piece of DCI. Each transmit beam set includes at least one transmit beam. Optionally, the indication information may be existing configuration information of a transmit beam configured by a network device and subsequently used to send DCI to a terminal. This can reduce signaling overheads.

Correspondingly, this application provides the indication apparatus, and the apparatus may implement the indication method in the third aspect. For example, the apparatus may be the network device. In a possible design, the apparatus may include a processing unit and a transceiver unit. The processing unit is configured to generate indication information, where the indication information is used to indicate a transmit beam that carries DCI and the DCI. The transceiver unit is configured to send the indication information.

According to a fourth aspect, this application provides an indication method and apparatus.

In a possible design, the method may include: generating and sending indication information, where the indication information is used to indicate a time-frequency resource group, a time-frequency resource group is used to carry a same piece of DCI, and time-frequency resources included in different time-frequency resource groups do not overlap with each other. The indication information may be used to indicate at least one time-frequency resource group, and each time-frequency resource group may be some time-frequency resources for transmitting DCI. In this embodiment, a network device indicates, to a terminal in a signaling indication manner, which time-frequency resources belong to a same time-frequency resource group.

Correspondingly, this application provides the indication apparatus, and the apparatus may implement the indication method in the fourth aspect. For example, the apparatus may be the network device. In a possible design, the apparatus may include a processing unit and a transceiver unit. The processing unit is configured to generate indication information, where the indication information is used to indicate a time-frequency resource group, a time-frequency resource group is used to carry a same piece of DCI, and time-frequency resources included in different time-frequency resource groups do not overlap with each other. The transceiver unit is configured to send the indication information.

According to a fifth aspect, this application provides an information determining method and apparatus. For explanations of related content in the fifth aspect, refer to the first aspect. Details are not described herein again.

In a possible design, the method may include: receiving indication information, where the indication information is used to indicate a transmit beam set, and a transmit beam in the transmit beam set is used to carry a same piece of DCI; and then obtaining the transmit beam set based on the indication information.

Correspondingly, this application provides the information determining apparatus, and the apparatus may implement the DCI obtaining method in the fifth aspect. For example, the apparatus may be a terminal. In a possible design, the apparatus may include a transceiver unit and a processing unit. The transceiver unit is configured to receive indication information, where the indication information is used to indicate a transmit beam set, and a transmit beam in the transmit beam set is used to carry a same piece of DCI. The processing unit is configured to obtain the transmit beam set based on the indication information.

According to a sixth aspect, this application provides an information determining method and apparatus. For explanations of related content in the sixth aspect, refer to the second aspect. Details are not described herein again.

In a possible design, the method may include: receiving indication information, where the indication information is used to indicate a transmit beam that carries DCI, the transmit beam indicated in the indication information belongs to at least one transmit beam set, and a transmit beam in each transmit beam set is used to carry a same piece of DCI; and then obtaining the transmit beam set based on the indication information.

Correspondingly, this application provides the information determining apparatus, and the apparatus may implement the information determining method in the sixth aspect. For example, the apparatus may be a terminal. In a possible design, the apparatus may include a transceiver unit and a processing unit. The transceiver unit is configured to receive indication information, where the indication information is used to indicate a transmit beam that carries DCI, the transmit beam indicated in the indication information belongs to at least one transmit beam set, and a transmit beam in each transmit beam set is used to carry a same piece of DCI. The processing unit is configured to obtain the transmit beam set based on the indication information.

According to a seventh aspect, this application provides an information determining method and apparatus. For explanations of related content in the seventh aspect, refer to the third aspect. Details are not described herein again.

In a possible design, the method may include: receiving indication information, where the indication information is used to indicate a transmit beam that carries DCI and the DCI; and then obtaining the transmit beam that carries the DCI based on the indication information. In this embodiment, a set including a transmit beam that carries a same piece of DCI may be used as a transmit beam set.

Correspondingly, this application provides the information determining apparatus, and the apparatus may implement the information determining method in the seventh aspect. For example, the apparatus may be a terminal. In a possible design, the apparatus may include a transceiver unit and a processing unit. The transceiver unit is configured to receive indication information, where the indication information is used to indicate a transmit beam that carries DCI and the DCI. The processing unit is configured to obtain, based on the indication information, the transmit beam that carries the DCI.

According to an eighth aspect, this application provides an information determining method and apparatus.

In a possible design, the method may include: determining a quasi co-location (quasi co located, QCL) relationship between reference signals during beam sweeping, and determining a transmit beam set based on the QCL relationship between reference signals during the beam sweeping, where transmit beams carrying reference signals that meet the QCL relationship belong to a same transmit beam set, and a transmit beam in each transmit beam set is used to carry a same piece of DCI.

Correspondingly, this application provides the information determining apparatus, and the apparatus may implement the information determining method in the eighth aspect. For example, the apparatus may be a terminal. In a possible design, the apparatus may include a processing unit, configured to: determine a QCL relationship between reference signals during beam sweeping, and determine a transmit beam set based on the QCL relationship between reference signals during the beam sweeping, where transmit beams carrying reference signals that meet the QCL relationship belong to a same transmit beam set, and a transmit beam in each transmit beam set is used to carry a same piece of DCI.

According to a ninth aspect, this application provides an information determining method and apparatus. For explanations of related content in the ninth aspect, refer to the fourth aspect. Details are not described herein again.

In a possible design, the method may include: receiving indication information, where the indication information is used to indicate a time-frequency resource group, a time-frequency resource group is used to carry a same piece of DCI, and time-frequency resources included in different time-frequency resource groups do not overlap with each other; and then obtaining the time-frequency resource group based on the indication information.

Correspondingly, this application provides the information determining apparatus, and the apparatus may implement the information determining method in the ninth aspect. For example, the apparatus may be a terminal. In a possible design, the apparatus may include a transceiver unit and a processing unit. The transceiver unit is configured to receive indication information, where the indication information is used to indicate a time-frequency resource group, a time-frequency resource group is used to carry a same piece of DCI, and time-frequency resources included in different time-frequency resource groups do not overlap with each other. The processing unit is configured to obtain the time-frequency resource group based on the indication information.

Any one of the foregoing indication information may be, for example, but is not limited to being, carried in radio resource control (radio resource control, RRC) signaling and/or media access control (medium access control, MAC) signaling.

According to a tenth aspect, this application provides a DCI sending method and apparatus.

In a possible design, the method may include: determining a plurality of transmit beams that carry a same piece of DCI; and sending the DCI by using the plurality of transmit beams.

Correspondingly, this application provides the DCI sending apparatus. The apparatus may implement the DCI sending method in the tenth aspect. For example, the apparatus may be a network device. In a possible design, the apparatus may include a processing unit and a transceiver unit. The processing unit is configured to determine a plurality of transmit beams that carry a same piece of DCI. The transceiver unit is configured to send the DCI by using the plurality of transmit beams.

In a possible design, the plurality of transmit beams that carry the same piece of DCI are selected from a same transmit beam set, the transmit beam set includes at least one transmit beam, and the at least one transmit beam carries the same piece of DCI. Optionally, the plurality of transmit beams may be some or all transmit beams in the transmit beam set. For related descriptions of the transmit beam set, refer to the foregoing descriptions.

According to an eleventh aspect, this application provides a DCI sending method and apparatus.

In a possible design, the method may include: determining a time-frequency resource that carries a same piece of DCI; and sending the DCI by using the plurality of time-frequency resources.

Correspondingly, this application provides the DCI sending apparatus. The apparatus may implement the DCI sending method in the eleventh aspect. For example, the apparatus may be a network device. In a possible design, the apparatus may include a processing unit and a transceiver unit. The processing unit is configured to determine a plurality of time-frequency resources that carry a same piece of DCI. The transceiver unit is configured to send the DCI by using the plurality of time-frequency resources.

In a possible design, the plurality of time-frequency resources are selected from a same time-frequency resource group, where the time-frequency resource group includes at least one time-frequency resource, and the at least one time-frequency resource carries a same piece of DCI. Optionally, the plurality of time-frequency resources may be some or all time-frequency resources in the time-frequency resource group. One time-frequency resource is a set of resource elements (resource element, RE) occupied when one transmit beam is used to send one piece of DCI. Different time-frequency resources in a same time-frequency resource group are used to send the same piece of DCI on different transmit beams a plurality of times, and time-frequency resources in different time-frequency resource groups are used to send different pieces of DCI. For related descriptions of the time-frequency resource group, refer to the foregoing descriptions.

According to a twelfth aspect, this application provides a DCI obtaining method and apparatus.

In a possible design, the method may include: obtaining DCI based on at least one of a plurality of transmit beams that carry the same piece of DCI; and then performing a corresponding control operation based on the DCI.

In a possible design, the method may further include: if N pieces of DCI are obtained through decoding, stopping monitoring a transmit beam, where N is a maximum quantity of pieces of DCI configured by a network device. This can reduce blind detection complexity for a terminal.

Correspondingly, this application provides the DCI obtaining apparatus. The apparatus may implement the DCI obtaining method in the twelfth aspect. For example, the apparatus may be the terminal. In a possible design, the apparatus may include a processing unit, configured to: obtain DCI based on at least one of a plurality of transmit beams that carry the same piece of DCI; and then perform a corresponding control operation based on the DCI.

In a possible design, the processing unit may be further configured to: if N pieces of DCI are obtained through decoding, stop monitoring a transmit beam, where N is a maximum quantity of pieces of DCI configured by a network device.

In a possible design, the plurality of transmit beams that carry (that is, actually carry) the same piece of DCI are selected from a same transmit beam set, the transmit beam set includes at least one transmit beam, and the at least one transmit beam is used to carry (that is, may be used to carry or actually carry) the same piece of DCI. Optionally, the plurality of transmit beams may be some or all transmit beams in the transmit beam set.

In a possible design, the obtaining DCI based on at least one of a plurality of transmit beams that carry the same piece of DCI may include: decoding information obtained by monitoring any one of the plurality of transmit beams that carry the DCI, to obtain the DCI. Optionally, the method may further include: after the information obtained by monitoring any one of the plurality of transmit beams that carry the DCI is decoded successfully, stopping monitoring another transmit beam in the plurality of transmit beams. This can reduce blind detection complexity for the terminal.

In a possible design, the obtaining DCI based on at least one of a plurality of transmit beams that carry the same piece of DCI may include: jointly decoding information obtained by monitoring a plurality of transmit beams in the plurality of transmit beams that carry the DCI, to obtain the DCI. This can improve decoding accuracy of the terminal.

According to a thirteenth aspect, this application provides a DCI obtaining method and apparatus.

In a possible design, the method may include: obtaining DCI based on at least one of a plurality of time-frequency resources that carry the same piece of DCI; and then performing a corresponding control operation based on the DCI.

In a possible design, the method may further include: if N pieces of DCI are obtained through decoding, stopping monitoring a transmit beam, where N is a maximum quantity of pieces of DCI configured by a network device. This can reduce blind detection complexity for a terminal.

Correspondingly, this application provides the DCI obtaining apparatus. The apparatus may implement the DCI obtaining method in the thirteenth aspect. For example, the apparatus may be the terminal. In a possible design, the apparatus may include a processing unit, configured to: obtain DCI based on at least one of a plurality of time-frequency resources that carry the same piece of DCI; and then perform a corresponding control operation based on the DCI.

In a possible design, the processing unit may be further configured to: if N pieces of DCI are obtained through decoding, stop monitoring a transmit beam, where N is a maximum quantity of pieces of DCI configured by a network device.

In a possible design, the plurality of time-frequency resources that carry (that is, actually carry) the same piece of DCI are selected from a same time-frequency resource group, the time-frequency resource group includes at least one time-frequency resource, and the at least one time-frequency resource is used to carry (that is, may be used to carry or actually carry) the same piece of DCI. Optionally, the plurality of time-frequency resources may be some or all time-frequency resources in the time-frequency resource group.

In a possible design, the obtaining DCI based on at least one of a plurality of time-frequency resources that carry the same piece of DCI includes: decoding information obtained by monitoring a transmit beam on any one of the plurality of time-frequency resources that carry the DCI, to obtain the DCI. Optionally, the method may further include: after the information obtained by monitoring a transmit beam on the any one of the plurality of time-frequency resources that carry the DCI is decoded successfully, stopping monitoring a transmit beam on another time-frequency resource in the time-frequency resource group. This can reduce blind detection complexity for the terminal.

In a possible design, the obtaining DCI based on at least one of a plurality of time-frequency resources that carry the same piece of DCI includes: decoding information obtained by monitoring a transmit beam on a plurality of time-frequency resources in the plurality of time-frequency resources that carry the same piece of DCI, to obtain the DCI. This can improve decoding accuracy of the terminal.

In a possible design, any apparatus provided above may implement the foregoing method by using software or hardware, or by executing corresponding software by hardware. The apparatus may include a processor and a memory. The processor is configured to support the apparatus in performing a corresponding function in the foregoing method according to the corresponding aspect. The memory is configured to be coupled to the processor, and store a necessary program and necessary data of the apparatus. In addition, the apparatus may further include a communications interface, configured to support communication between the apparatus and another network element. The communications interface may be a transceiver.

This application further provides a computer storage medium. The computer storage medium stores a computer program. When the program is run on a computer, the computer is enabled to perform the method according to any one of the foregoing aspects.

This application further provides a computer program product. When the computer program product is run on a computer, the computer is enabled to perform the method according to any one of the foregoing aspects.

This application further provides a communications chip. The communications chip stores an instruction, and when the instruction is run on a network device or a terminal, the network device or the terminal is enabled to perform the methods in the foregoing aspects.

It may be understood that any apparatus, computer storage medium, or computer program product provided above is configured to perform a corresponding method provided in the foregoing descriptions. Therefore, for a beneficial effect that can be achieved by the any apparatus, computer storage medium, or computer program product, refer to a beneficial effect of the corresponding method. Details are not described herein again.

### BRIEF DESCRIPTION OF DRAWINGS

FIG. 1 is a schematic diagram of a communications system to which technical solutions are applicable according to an embodiment of this application;
FIG. 2 is a schematic diagram of another communications system to which technical solutions are applicable according to an embodiment of this application;
FIG. 3 is a schematic diagram of beam alignment and DCI transmission according to an embodiment of this application;
FIG. 4 is a schematic diagram of a DCI transmission method according to an embodiment of this application;
FIG. 5 is a schematic diagram of a time-frequency resource location at which DCI is located according to an embodiment of this application;
FIG. 6 is a schematic diagram of another time-frequency resource location at which DCI is located according to an embodiment of this application;
FIG. 7 is a schematic diagram of another DCI transmission method according to an embodiment of this application;
FIG. 8 is a schematic diagram of another DCI transmission method according to an embodiment of this application;
FIG. 9 is a schematic diagram of another DCI transmission method according to an embodiment of this application;
FIG. 10 is a schematic diagram of another DCI transmission method according to an embodiment of this application;
FIG. 11 is a schematic diagram of another DCI transmission method according to an embodiment of this application;
FIG. 12 is a schematic diagram of another DCI transmission method according to an embodiment of this application;
FIG. 13 is a schematic diagram of another DCI transmission method according to an embodiment of this application;
FIG. 14 is a schematic diagram of another time-frequency resource location at which DCI is located according to an embodiment of this application;
FIG. 15 is a schematic structural diagram of a network device according to an embodiment of this application; and
FIG. 16 is a schematic structural diagram of a terminal according to an embodiment of this application.

### DESCRIPTION OF EMBODIMENTS

The term "a plurality of" in this application means two or more. The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. In this application, the terms "first", "second", and the like are intended to distinguish between different objects but do not indicate a particular order of the objects.

The technical solutions provided in this application may be applied to various communications systems in which a beam is included. For example, a beam, a 5G communications system, a future evolved system, or a plurality of converged communications systems are introduced on a basis of an existing communications system. A plurality of application scenarios may be included, for example, a machine to machine (machine to machine, M2M) scenario, a D2M scenario, a macro-micro communication scenario, an enhanced mobile broadband (enhance mobile broadband, eMBB) scenario, an ultra-reliable and low-latency communication (ultra reliable & low latency communication, uRLLC) scenario, and a massive machine-type communications (massive machine type communication, mMTC) scenario. These scenarios may include but are not limited to a scenario of communication between terminals, a scenario of communication between network devices, a scenario of communication between a network device and a terminal, and the like. Alternatively, the technical solutions provided in this application may be applied to a scenario of communication between terminals, a scenario of communication between network devices, and the like in a 5G communications system.

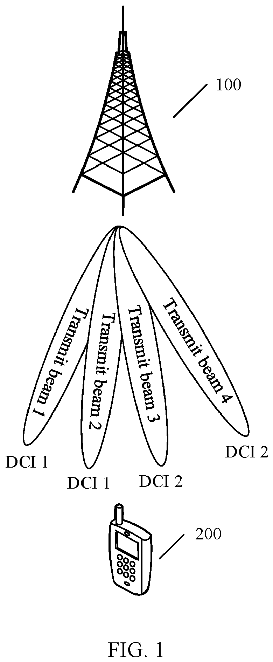

FIG. 1 is a schematic diagram of a communications system to which technical solutions are applicable according to this application. The communications system may include one or more network devices 100 (only one network device is shown) and one or more terminals 200 (only one terminal is shown) connected to each network device. In the communications system, the network device 100 may send, by using a plurality of transmit beams, a plurality of pieces of DCI to the terminal 200 connected to the network device 100. Any piece of DCI may be carried on the plurality of transmit beams for transmission. In other words, the network device may send any one of the plurality of pieces of DCI to the terminal 200 by using the plurality of transmit beams. For example, in FIG. 1, the network device 100 sends DCI 1 to the terminal 200 by using transmit beams 1 and 2, and sends DCI 2 to the terminal by using transmit beams 3 and 4.

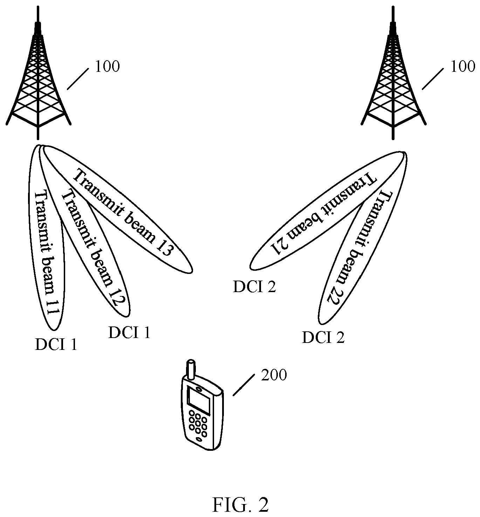

FIG. 2 is a schematic diagram of another communications system to which technical solutions are applicable according to this application. The communications system may include a plurality of network devices 100 (only two network devices are shown) and one or more terminals 200 (only one terminal is shown). At least two network devices 100 cooperatively serve one terminal 200. A same network device 200 may serve different terminals 200. Different terminals 200 may be served by a same network device 200 or different network devices 200. In the communications system, the network device 100 may send, by using a plurality of transmit beams, one or more pieces of DCI to the terminal served by the network device 100, where any piece of DCI may be carried on the plurality of transmit beams for transmission. For example, in FIG. 2, two network devices 100 cooperatively serve a same terminal. One network device 100 sends DCI 1 to the terminal by using transmit beams 11, 12, and 13. The other network device 100 sends DCI 2 to the terminal by using transmit beams 21 and 22.

FIG. 1 and FIG. 2 are merely schematic diagrams, and do not constitute any limitation on an applicable scenario of the technical solutions provided in this application.

The network device 100 may be a device that can communicate with the terminal 200. The network device 100 may be a transmission node (transmission reference point, TRP), a base station, a relay node, an access point, or the like. The network device 100 may be a base transceiver station (base transceiver station, BTS) in a global system for mobile communications (global system for mobile communication, GSM) or code division multiple access (code division multiple access, CDMA) network, or may be an NB (NodeB) in wideband code division multiple access (wideband code division multiple access, WCDMA), or may be an eNB or an eNodeB (evolutional NodeB) in LTE. Alternatively, the network device 100 may be a radio controller in a cloud radio access network (cloud radio access network, CRAN) scenario. Alternatively, the network device 100 may be a network device in a 5G communications system or a network device in a future evolved network, or may be a wearable device, a vehicle-mounted device, or the like.

The terminal 200 may be user equipment (user equipment, UE), an access terminal, a UE unit, a UE station, a mobile station, a mobile console, a remote station, a remote terminal, a mobile device, a UE terminal, a terminal, a wireless communications device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital Assistant, PDA), a handheld device having a wireless communication function, a computing device or another processing device connected to a wireless modem, a vehicle-mounted device, a wearable device, a terminal in a future 5G network, a terminal in a future evolved PLMN network, or the like.

A beam and a beam pair are introduced into the communications system. The beam is a communication resource. Beams may include a transmit beam and a receive beam. Different beams may be considered as different resources. Same information or different information may be sent by using (by using) different beams. The beam pair is established based on the beam. One beam pair usually includes one transmit beam of a transmit end device and one receive beam of a receive end device. In an uplink direction, the transmit end device may be the terminal, and the receive end device may be the network device. In a downlink direction, the transmit end device may be the network device, and the receive end device may be the terminal. Unless otherwise specified, a transmit beam in the following is a transmit beam of the network device, and a receive beam in the following is a receive beam of the terminal.

Beam indication information is used to indicate a beam. For example, the beam indication information may be but is not limited to at least one of the following information: a beam index (for example, a relative number, a logical number, or a physical number of the beam), a port number corresponding to a reference signal carried on the beam, or beam pair link (beam pair link, BPL) information. It should be noted that the beam indication information may also be implicitly indicated by using other information. For example, there is a correspondence between the beam indication information and the other information. Therefore, the beam may be indicated by indicating the other information. The beam herein may be the transmit beam, or may be the receive beam.

In a communications system such as a 5G new radio (new radio, NR) system, both a network device and a terminal may generate one or more transmit beams and one or more receive beams. Beam alignment needs to be performed before a signal is transmitted. For example, the signal may be but is not limited to control channel information, data channel information, or a sounding signal. The control channel information includes DCI.

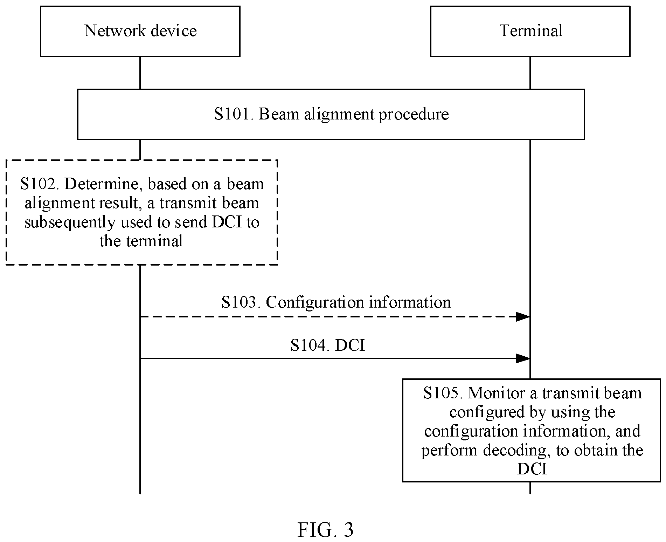

FIG. 3 is a schematic diagram of beam alignment and DCI transmission. Details are as follows:

S101. A network device and a terminal perform a beam alignment procedure. Specifically, for example, steps may include but are not limited to: The network device sends, to the terminal, indication information of a plurality of transmit beams configured for carrying reference signals, and then sends the reference signals to the terminal by using the plurality of transmit beams (namely, a beam sweeping procedure). The terminal separately receives the reference signals from the plurality of transmit beams of the network device by using one or more receive beams, and detects signal strength of the reference signals. Then, the terminal reports, to the network device, beam indication information of one or more transmit beams that carry reference signals with relatively good signal strength, and records beam indication information of receive beams for receiving the reference signals with relatively good signal strength.

For example, the network device sends the reference signals to the terminal by using transmit beams 1, 2, and 3, and the terminal separately receives the reference signals from the transmit beams 1, 2, and 3 by using receive beams a and b. It is assumed that the reference signals received by the terminal are marked as 1a, 2a, 3a, 1b, 2b, and 3b. 1a indicates a reference signal received by the terminal from the transmit beam 1 by using the receive beam a. Other reference signals are similar to 1a, and are not explained one by one herein. In this case, the terminal may separately detect signal strength of 1a, 2a, 3a, 1b, 2b, and 3b. Assuming that 1a has relatively good signal strength, the terminal reports beam indication information of the transmit beam 1 to the network device, and records beam indication information of the receive beam a. In this way, the beam alignment is implemented. Subsequently, after steps S102 and S103 are performed, the network device may send a signal to the terminal by using the transmit beam 1, and the terminal may receive the signal by using the receive beam a.

S102. The network device determines, based on a beam alignment result (namely, the beam indication information reported by the terminal), the transmit beam subsequently used to send DCI to the terminal. The transmit beam determined by the network device and subsequently used to send the DCI to the terminal may be some or all transmit beams indicated in the beam indication information reported by the terminal.

S103. The network device sends configuration information to the terminal. The configuration information is used to indicate the transmit beam subsequently used by the network device to send the DCI to the terminal. For example, the configuration information may include but is not limited to the beam indication information of the transmit beam subsequently used by the network device to send the DCI to the terminal. The terminal receives the configuration information. Optionally, the terminal may store the configuration information.

S104. The network device sends the DCI to the terminal by using the transmit beam configured by using the configuration information.

S105. The terminal monitors the transmit beam configured by using the configuration information, and decodes detected information, to obtain the DCI.

It should be noted that the foregoing describes a case in which the network device configures, for the terminal by using signaling, the transmit beam subsequently used by the network device to send the DCI to the terminal. This is not limited in this application. For example, in step S102, which transmit beam or transmit beams in the beam alignment result is or are used as the transmit beam or transmit beams subsequently used to send the DCI to the terminal may be specified in a protocol. In this case, no signaling indication is required, and signaling overheads can be reduced.

Because the terminal does not know which pieces of DCI are transmitted on which transmit beams, the terminal needs to monitor all transmit beams that may carry DCI corresponding to the terminal, so as to obtain, through decoding, all DCI sent to the terminal. Consequently, blind detection complexity is relatively high. For example, based on FIG. 2, it is assumed that the terminal successfully obtains, through decoding, the DCI 1 by monitoring the transmit beam 11. The terminal does not know whether DCI 1 that is successfully decoded or DCI 2 that is not successfully decoded is sent on the transmit beam 12. Therefore, the terminal further continues to monitor the transmit beam 12. Likewise, the terminal continues to monitor the transmit beam 13. The rest may be deduced by analogy, until the terminal monitors all the transmit beams that may carry the DCI corresponding to the terminal, namely, until the terminal completes monitoring the transmit beams 11, 12, 13, 21, and 22. However, actually, after correctly obtaining, through decoding, the DCI 1 by monitoring the transmit beam 11, the terminal does not need to continue to monitor the transmit beams 12 and 13.

Based on this, this application provides a DCI transmission method and apparatus, and may specifically include an indication method and apparatus, an information determining method and apparatus, a DCI sending method and apparatus, and a DCI obtaining method and apparatus. The following describes related methods provided in this application with reference to the accompanying drawings.

### Embodiment 1

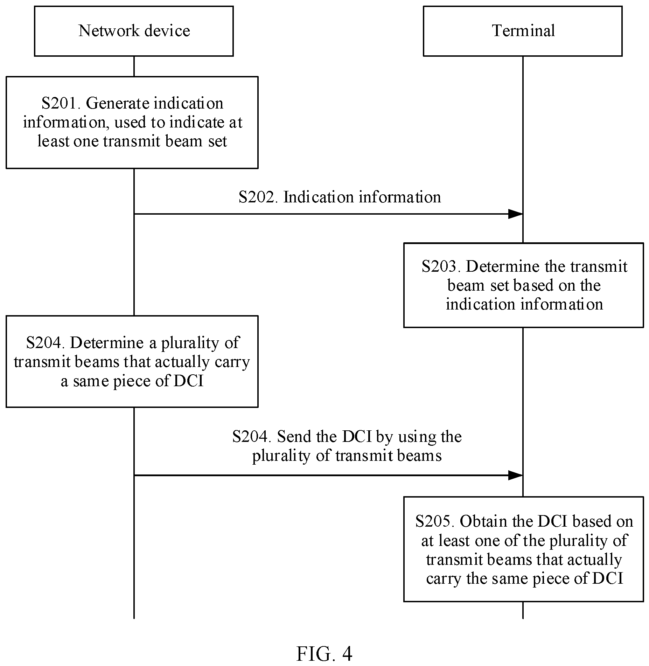

FIG. 4 is a schematic diagram of a DCI transmission method according to this application. Details are as follows:

S201. A network device generates indication information, where the indication information is used to indicate at least one transmit beam set, each transmit beam set includes at least one transmit beam, and a transmit beam in each transmit beam set is used to carry a same piece of DCI, and transmit beams in different transmit beam sets are used to carry different pieces of DCI.

The network device may be any network device in a non-coordinated scenario (refer to FIG. 1), or may be any network device in a coordinated scenario (refer to FIG. 2). A transmit beam set including a transmit beam of a network device is referred to as a transmit beam set corresponding to the network device. Each network device may correspond to at least one transmit beam set, and the transmit beam set corresponding to each network device is used to carry DCI of the network device.

Indication information generated by any network device may be used to indicate at least one transmit beam set of the network device, or may be used to indicate at least one transmit beam set of another network device. For example, in the coordinated scenario, when the network device is a serving network device, the at least one transmit beam set may be at least one transmit beam set including a transmit beam of one or more network devices (including the serving network device and/or a non-serving network device). When the network device is a non-serving network device, the at least one transmit beam set may be at least one transmit beam set of the non-serving network device. Certainly, this is not limited in this application. The serving network device is a network device configured to manage another network device in the coordinated scenario. For a same terminal, a network device serving the terminal may include at least one serving network device. An implementation of determining the serving network device is not limited in this application.

It may be understood that a plurality of network devices serving a same terminal may exchange information with each other. Therefore, a network device can learn of a transmit beam, used to carry any piece of DCI, of another network device, or the plurality of network devices negotiate with each other to obtain a serving network device. One transmit beam is usually used to carry one piece of DCI, and different transmit beams may also carry a same piece of DCI. This is used as an example for description in this application. Based on this, transmit beams in different transmit beam sets do not overlap each other. Certainly, this application is also applicable to a case in which different pieces of DCI are sent on one transmit beam. In addition, any network device may generate one or more pieces of the indication information.

S202. The network device sends the indication information, and the terminal receives the indication information.

The indication information may be carried in one or more messages provided in the prior art, for example, carried in configuration information of a transmit beam configured by the network device and subsequently used to send DCI to the terminal, or may be carried in one or more newly designed messages. For example, the indication information may be but is not limited to RRC signaling and/or MAC signaling.

Optionally, the transmit beam set includes a plurality of transmit beams used to carry reference signals (for example, CSI-RSs) that meet a QCL relationship. In this case, the indication information may be configuration information for configuring the QCL relationship between reference signals in a beam sweeping process.

In this embodiment, the network device configures, for the terminal, which transmit beams are used to send the same piece of DCI, that is, configures a correspondence between a transmit beam set and a transmit beam. How to indicate the correspondence is not limited in this application. The network device may not indicate, to the terminal, which transmit beam in a transmit beam set is used to carry which piece of DCI. As shown in FIG. 2, it is assumed that one network device sends the DCI 1 to the terminal by using the transmit beams 11, 12, and 13, and the other network device sends the DCI 2 to the terminal by using the transmit beams 21 and 22. In this case, the indication information may be used to configure, for the terminal, that the transmit beams 11, 12, and 13 configured belong to a same transmit beam set and the transmit beams 21 and 22 belong to a same transmit beam set. The network device may not configure, for the terminal, whether the transmit beam set including the transmit beams 11, 12, and 13 is used to carry the DCI 1 or the DCI 2 and whether the transmit beam set including the transmit beams 21 and 22 is used to carry the DCI 1 or the DCI 2.

S203. The terminal determines the transmit beam set based on the indication information.

Steps S201 to S203 may be considered as a procedure of configuring related information of the DCI.

S204. The network device determines a plurality of transmit beams that actually carry the same piece of DCI, and sends the DCI by using the plurality of transmit beams, where the plurality of transmit beams that actually carry the same piece of DCI are selected from a same transmit beam set. Optionally, the plurality of transmit beams may be some or all transmit beams in the transmit beam set.

S205. The terminal obtains the DCI based on at least one of the plurality of transmit beams that actually carry the same piece of DCI, and performs a corresponding control operation based on the DCI. Control operations performed based on the DCI are not limited in this application. For details, refer to the prior art.

Steps S204 and S205 may be considered as a procedure of transmitting the DCI.

It should be noted that after a beam alignment procedure is performed, the network device may configure, for the terminal, which transmit beam or transmit beams on which time domain resources (for example, a symbol) are used to send the DCI. The terminal may monitor a corresponding transmit beam on these time domain resources configured by the network device. The network device may send the DCI on different symbols by using different transmit beams, or may send the DCI on a same symbol by using different transmit beams. For example, the symbol may be but not limited to an orthogonal frequency division multiplexing (orthogonal frequency division multiplexing, OFDM) symbol.

In an example 1, a network device 1 and a network device 2 cooperatively serve the terminal. The network device 1 sends DCI 1 on a symbol 1 by using a transmit beam 11, sends the DCI 1 on a symbol 2 by using a transmit beam 12, and sends the DCI 1 on a symbol 3 by using a transmit beam 13. The network device 2 sends DCI 2 on the symbol 1 by using a transmit beam 21, and sends the DCI 2 on the symbol 2 by using a transmit beam 22. A correspondence between a transmit beam and a symbol may be shown in Table 1.

**Table 1**

| | Symbol 1 | Symbol 2 | Symbol 3 |
|---|---|---|---|
| Network device 1 | Transmit beam 11 | Transmit beam 12 | Transmit beam 13 |
| Network device 2 | Transmit beam 21 | Transmit beam 22 | |

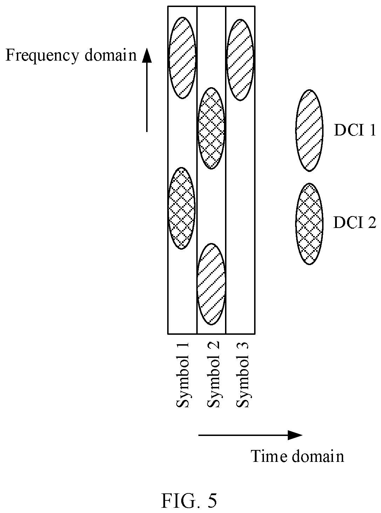

FIG. 5 is a schematic diagram of a time-frequency resource location at which DCI is located in this example.

In an example 2, a network device 1 and a network device 2 cooperatively serve the terminal. The network device 1 sends DCI 1 on a symbol 1 by using transmit beams 11 and 12, and sends the DCI 1 on a symbol 2 by using a transmit beam 13. The network device 2 sends DCI 2 on the symbol 1 by using a transmit beam 21, and sends the DCI 2 on the symbol 2 by using a transmit beam 22. A correspondence between a transmit beam and a symbol may be shown in Table 2.

**Table 2**

| | Symbol 1 | Symbol 2 |
|---|---|---|
| Network device 1 | Transmit beams 11 and 12 | Transmit beam 13 |
| Network device 2 | Transmit beam 21 | Transmit beam 22 |

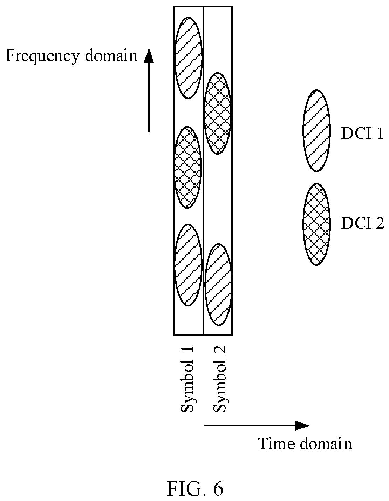

FIG. 6 is a schematic diagram of a time-frequency resource location at which DCI is located in this example.

For example, step S205 is implemented in, but not limited to, the following manner:

Manner 1: Decode information obtained by monitoring any one of the plurality of transmit beams that actually carry the same piece of DCI, to obtain the DCI.

Optionally, after the terminal succeeds in decoding the information obtained by monitoring any one of the plurality of transmit beams that actually carry the DCI, the terminal stops monitoring another transmit beam in the plurality of transmit beams. This can reduce blind detection complexity for the terminal. In addition, if the terminal fails to decode the information obtained by monitoring any one of the plurality of transmit beams that actually carry the DCI, the terminal may continue to monitor the another transmit beam in the plurality of transmit beams.

Based on the foregoing example 1, the terminal may monitor the transmit beams 11 and 21 on the symbol 1. If the terminal succeeds in decoding information obtained by monitoring the transmit beam 11, the terminal stops monitoring the transmit beams 12 and 13. Otherwise, the terminal continues to monitor the transmit beam 12 on the symbol 2. Likewise, whether the terminal monitors the transmit beam 13, and how the terminal monitors the transmit beams 21 and 22 may be learned.

Based on the foregoing example 2, the terminal may monitor the transmit beams 11, 12, and 21 on the symbol 1. If the terminal succeeds in decoding information obtained by monitoring the transmit beams 11 and/or 12, the terminal stops monitoring the transmit beam 13. Otherwise, the terminal continues to monitor the transmit beam 13 on the symbol 2. Likewise, how the terminal monitors the transmit beams 21 and 22 may be learned.

Monitoring a transmit beam on a symbol is monitoring the transmit beam on all time-frequency resources corresponding to the symbol. Specific time-frequency resources for all the time-frequency resources may be related to information such as a bandwidth for scheduling the terminal.

An objective of monitoring each transmit beam in a transmit beam set is to obtain, through decoding, DCI associated with the transmit beam set. When information obtained by monitoring any transmit beam in the transmit beam set is decoded successfully, it indicates that the terminal already obtains the DCI associated with the transmit beam set. Therefore, it is unnecessary to continue to monitor another transmit beam in the transmit beam set. When a transmit beam set includes at least two transmit beams, this manner can reduce the blind detection complexity, compared with the prior art.

Manner 2: Jointly decode information obtained by monitoring a plurality of transmit beams in the plurality of transmit beams that actually carry the DCI to obtain the DCI. This can improve decoding accuracy of the terminal. It should be noted that because a signal attenuation degree in a high frequency scenario is relatively high, when the technical solution is applied to the high frequency scenario, a beneficial effect, that is, improving decoding accuracy, can be better achieved.

If the plurality of transmit beams are some transmit beams in the transmit beam set that actually carries the DCI, when the terminal succeeds in jointly decoding the information obtained by monitoring the plurality of transmit beams in the plurality of transmit beams that actually carry the DCI, the terminal may stop monitoring another transmit beam in the plurality of transmit beams.

In this manner, before performing the joint decoding, the terminal may further obtain information such as a time-frequency resource location at which the DCI carried on the transmit beam is located, so that the terminal can jointly decode the information obtained by monitoring the plurality of transmit beams. The time-frequency resource location at which the DCI is located may be an absolute location in a search space, or may be a relative location in the search space. Certainly, this is not limited in this application. The information such as the time-frequency resource location at which the DCI is located may be specified in a protocol, or may be configured by the network device for the terminal by using signaling. Further, the network device may configure, for the terminal by using signaling, specific time-frequency resource locations at which carried signals can be jointly decoded. For example, there are a total of four possible search spaces. The network device informs the terminal that information carried in a search space 1 and a search space 2 can be jointly decoded, and that information carried in a search space 3 and a search space 4 can be jointly decoded. A specific manner of informing which search spaces include information that can be jointly decoded is not limited in this application.

It should be noted that during actual implementation, Manner 1 and Manner 2 may be used in combination. For example, Manner 1 is used to obtain some DCI, and Manner 2 is used to obtain some other DCI or the like.

Based on Manner 1 or Manner 2, if the terminal obtains N pieces of DCI through decoding, the terminal may stop monitoring a transmit beam, where N is a maximum quantity of pieces of DCI configured by the network device. A value of N may be specified in a protocol, or may be configured by the network device for the terminal by using signaling. This can further reduce the blind detection complexity for the terminal.

In this embodiment, the network device indicates, to the terminal in a signaling indication manner, which transmit beams belong to a same transmit beam set, so as to transmit the DCI based on the transmit beam set. This helps reduce the blind detection complexity for the terminal, or improve decoding accuracy of the terminal. For a specific analysis process, refer to the foregoing descriptions.

The technical solution shown in FIG. 4 provided in this application is described below by using an example with reference to the beam alignment and the DCI transmission method shown in FIG. 3.

In some embodiments of this application, the indication information in steps S201 and S202 may be the existing configuration information in the steps S102 and S103. In this embodiment, a network device may configure a transmit beam set each time the network device configures a transmit beam subsequently used to send DCI to a terminal.

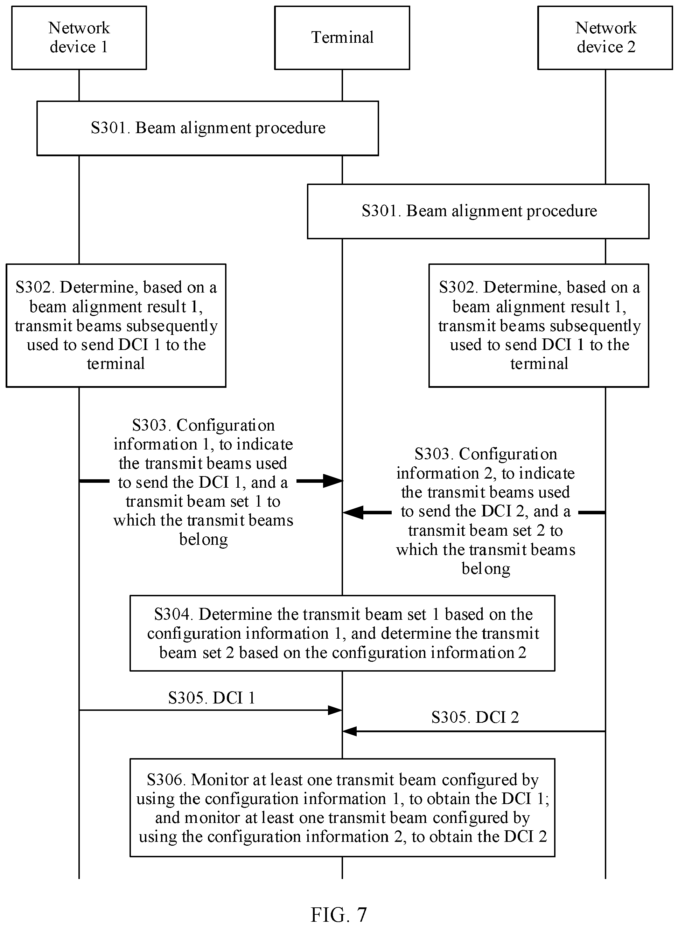

For example, a network device 1 and a network device 2 cooperatively serve a same terminal. A technical solution provided in this embodiment may be shown in FIG. 7. Details are as follows:

S301. The network device 1 and the terminal perform a beam alignment procedure, to obtain a beam alignment result 1, and the network device 2 and the terminal perform a beam alignment procedure, to obtain a beam alignment result 2. For the beam alignment procedure, refer to step S101. Certainly, this is not limited in this application.

S302. The network device 1 selects, based on the beam alignment result 1, transmit beams subsequently used by the network device 1 to send DCI 1 to the terminal, that is, transmit beams that actually carry the DCI 1; and the network device 2 selects, based on the beam alignment result 2, transmit beams subsequently used by the network device 2 to send DCI 2 to the terminal, that is, transmit beams that actually carry the DCI 2.

S303. The network device 1 sends configuration information 1 to the terminal, where the configuration information 1 is used to indicate these transmit beams that actually carry the DCI 1, and a transmit beam set 1 to which the transmit beams belong; the network device 2 sends configuration information 2 to the terminal, where the configuration information 2 is used to indicate these transmit beams that actually carry the DCI 2, and a transmit beam set 2 to which the transmit beams belong; and the terminal receives the configuration information 1 and the configuration information 2.

Configuration information may include beam indication information of transmit beams that actually carry corresponding DCI, and identifier information of a transmit beam set to which these transmit beams belong. For example, a format of the configuration information 1 and the configuration information 2 is shown in Table 3.

**Table 3**

| | |
|---|---|
| Configuration information 1 | Transmit beam set 1 {transmit beams 11, 12, and 13} |
| Configuration information 2 | Transmit beam set 2 {transmit beams 21 and 22} |

In this embodiment, that the network device sends configuration information of the network device is used as an example for description. During actual implementation, a network device may alternatively send configuration information of another network device to the terminal, to indicate a transmit beam subsequently used by the another network device to send DCI to the terminal.

It should be noted that the foregoing indication information is specifically reflected as the configuration information in this embodiment. A transmit beam configured by using the configuration information is a transmit beam that actually carries DCI. Therefore, in this implementation, a transmit beam in a transmit beam set is a transmit beam that actually carries corresponding DCI. For example, the transmit beam in the transmit beam set 1 is the transmit beam that actually carries the DCI 1.

S304. The terminal determines the transmit beam set 1 based on the configuration information 1, and determines the transmit beam set 2 based on the configuration information 2.

S305. The network device 1 sends the DCI 1 to the terminal by using the transmit beams (for example, the transmit beams 11, 12, and 13 shown in Table 3) configured by using the configuration information 1, and the network device 2 sends the DCI 2 to the terminal by using the transmit beams (for example, the transmit beams 21 and 22 shown in Table 3) configured by using the configuration information 2.

S306. The terminal monitors at least one transmit beam configured by using the configuration information 1, to obtain the DCI 1, and the terminal monitors at least one transmit beam configured by using the configuration information 2, to obtain the DCI 2. For a specific manner of obtaining the DCI 1 and the DCI 2, refer to the foregoing descriptions, and details are not described herein again. Subsequently, the terminal may perform a corresponding control operation based on the DCI 1 and the DCI 2.

In this embodiment, configuration information of a transmit beam configured by the network device and subsequently used to send DCI to the terminal carries information indicating which transmit beam information belongs to a same transmit beam set, so as to indicate the transmit beam set. In this case, no dedicated signaling needs to be designed to indicate the transmit beam set. Therefore, signaling overheads can be reduced.

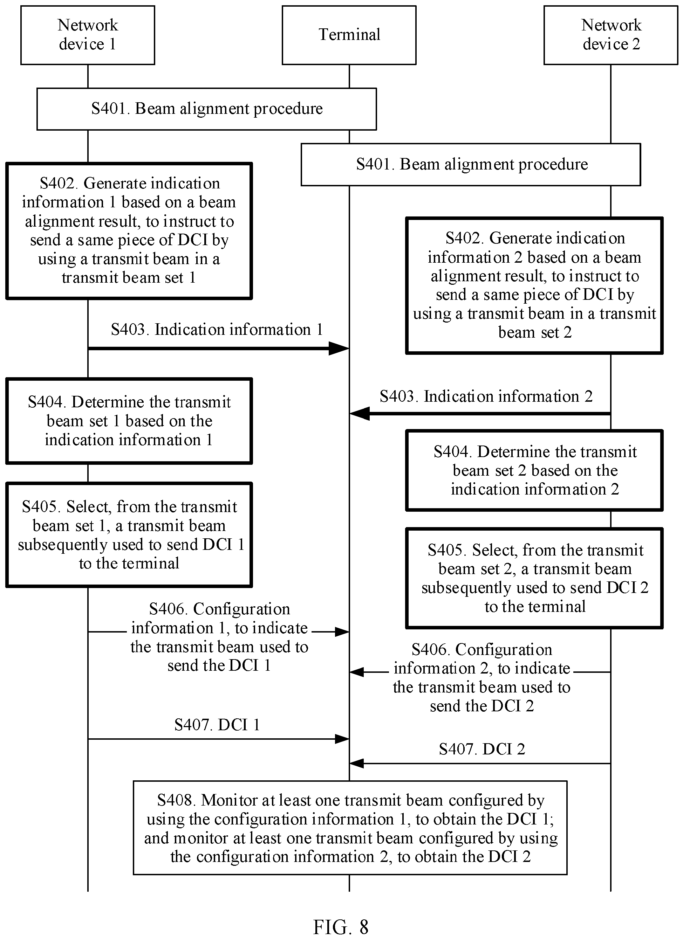

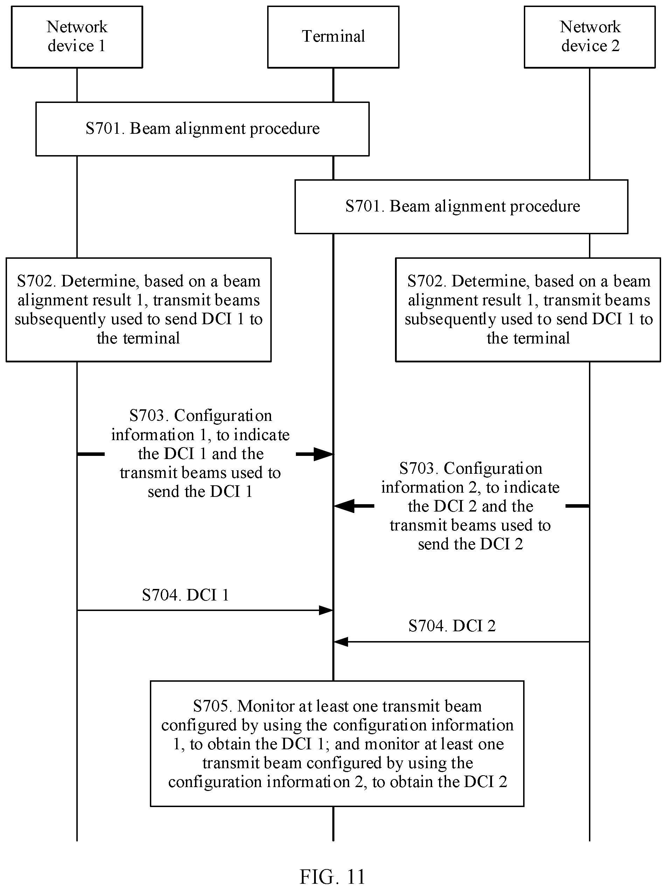

It should be noted that, in the example shown in FIG. 7 and the following examples shown in FIG. 8 and FIG. 11, a sequence of any two steps of the network device 1 and the network device 2 is not limited in this application.

In some other embodiments of this application, steps (that is, steps S201 and S202) in which the network device generates and sends the indication information in the technical solution shown in FIG. 4 may be performed after the beam alignment (that is, step S101) is performed, and before steps (that is, steps S102 and S103) in which the network device determines and configures the transmit beam subsequently used to send the DCI to the terminal.

For example, a network device 1 and a network device 2 cooperatively serve a same terminal. A technical solution provided in this embodiment may be shown in FIG. 8. Details are as follows:

For step S401, refer to step S301. Certainly, this is not limited in this application.

S402. The network device 1 generates indication information 1 based on a beam alignment result, where the indication information 1 is used to instruct the network device 1 to send a same piece of DCI to the terminal by using a transmit beam in a transmit beam set 1; and the network device 2 generates indication information 2 based on a beam alignment result, where the indication information 2 is used to instruct the network device 2 to send a same piece of DCI to the terminal by using a transmit beam in a transmit beam set 2.

S403. The network device 1 sends the indication information 1 to the terminal, the network device 2 sends the indication information 2 to the terminal, and the terminal receives the indication information 1 and the indication information 2.

Indication information may include beam indication information of transmit beams that can carry corresponding DCI, and identifier information of a transmit beam set to which these transmit beams belong. For example, a format of the indication information 1 and the indication information 2 is shown in Table 4.

**Table 4**

| | |
|---|---|
| Indication information 1 | Transmit beam set 1 {transmit beams 11, 12, 13, 14, and 15} |
| Indication information 2 | Transmit beam set 2 {transmit beams 21 and 22} |

S404. The terminal determines the transmit beam set 1 based on the indication information 1, and determines the transmit beam set 2 based on the indication information 2, and the terminal may store the transmit beam sets 1 and 2.

S405. The network device 1 selects, from the transmit beam set 1, a transmit beam subsequently used by the network device 1 to send DCI 1 to the terminal, that is, a transmit beam that actually carries the DCI 1, and the network device 2 selects, from the transmit beam set 2, a transmit beam subsequently used by the network device 2 to send DCI 2 to the terminal, that is, a transmit beam that actually carries the DCI 2.

S406. The network device 1 sends configuration information 1 to the terminal, where the configuration information 1 is used to indicate the transmit beam that actually carries the DCI 1; the network device 2 sends configuration information 2 to the terminal, where the configuration information 2 is used to indicate the transmit beam that actually carries the DCI 1; and the terminal receives the configuration information 1 and the configuration information 2.

Configuration information may include beam indication information of a transmit beam that actually carries corresponding DCI. For example, based on Table 4, a format of the configuration information 1 and the configuration information 2 is shown in Table 5.

**Table 5**

| | |
|---|---|
| Configuration information 1 | Transmit beams 11, 12, and 13 |
| Configuration information 2 | Transmit beams 21 and 22 |

In this embodiment, transmit beams that actually carry DCI may be some or all transmit beams in a transmit beam set that can transmit the DCI.

For steps S407 and S408, refer to steps S305 and S306. Certainly, this is not limited in this application.

In this embodiment, after beam alignment, the network device indicates, to the terminal, which transmit beams belong to a same transmit beam set, and then selects, from a configured transmit beam set, a transmit beam subsequently used to send DCI to the terminal. An interval at which a beam alignment procedure is performed is usually relatively long, while an interval at which a procedure of configuring a transmit beam subsequently used to send DCI to the terminal is relatively short. For example, before the network device 1 or the network device 2 performs beam alignment next time, steps S405 to S408 may be performed a plurality of times. Transmit beams determined in different times of performing steps S405 to S408 and subsequently used to send DCI to the terminal may be the same, or may be different. Therefore, compared with the embodiment shown in FIG. 7, this embodiment can reduce configuration complexity.

### Embodiment 2

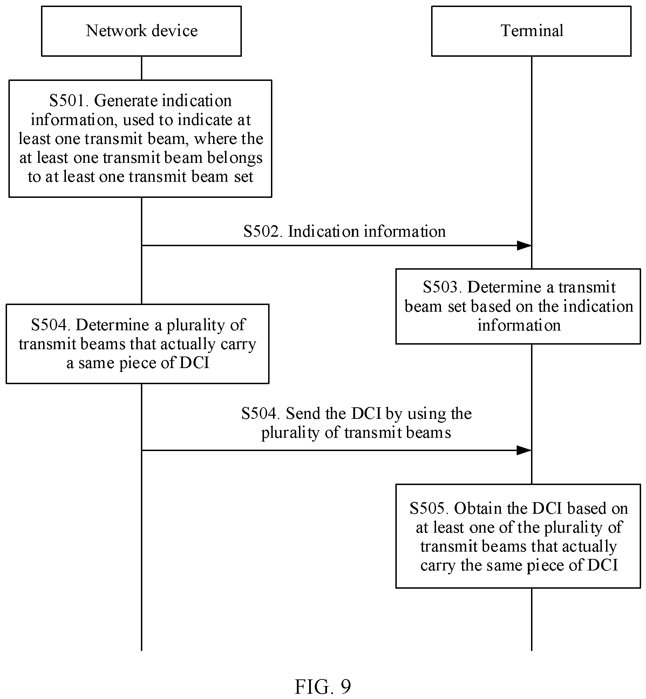

FIG. 9 is a schematic diagram of another DCI transmission method according to this application. Details are as follows:

S501. A network device generates indication information, where the indication information is used to indicate at least one transmit beam, the at least one transmit beam belongs to at least one transmit beam set, each transmit beam set includes at least one transmit beam, a transmit beam in each transmit beam set is used to carry a same piece of DCI, transmit beams in different transmit beam sets are used to carry different pieces of DCI, and the indication information may include beam indication information of a transmit beam that carries DCI.

The network device may be any network device in a non-coordinated scenario, or may be any network device in a coordinated scenario. Each network device may correspond to at least one transmit beam set, and the transmit beam set corresponding to each network device is used to carry DCI of the network device. For example, when the network device is a serving network device, the at least one transmit beam may be a transmit beam of one or more network devices (including the serving network device and/or a non-serving network device). When the network device is a non-serving network device, the at least one transmit beam may be at least one transmit beam of the non-serving network device.

A rule for determining which transmit beams belong to one transmit beam set may be preset, for example, preset by using a protocol, or preconfigured by using signaling. For descriptions of the beam indication information, refer to the foregoing descriptions. The rule is described by using an example in which the beam indication information is a logical beam number. For example, a transmit beam indicated in beam indication information with an odd number belongs to a transmit beam set, and a transmit beam indicated in beam indication information with an even number belongs to another transmit beam set. For example, if the indication information includes beam indication information 1, beam indication information 2, beam indication information 3, and beam indication information 4, transmit beams indicated in the beam indication information 1 and the beam indication information 3 belong to a transmit beam set, and transmit beams indicated in the beam indication information 2 and the beam indication information 4 belong to another transmit beam set. For example, a transmit beam indicated in beam indication information greater than a value belongs to a transmit beam set, and a transmit beam indicated in beam indication information less than or equal to the value belongs to another transmit beam set. For example, if the value is 3, and the indication information includes beam indication information 1, beam indication information 2, beam indication information 5, and beam indication information 6, transmit beams indicated in the beam indication information 1 and the beam indication information 2 belong to a same transmit beam set, and transmit beams indicated in the beam indication information 5 and the beam indication information 6 belong to another transmit beam set.

It should be noted that any network device may generate one or more pieces of indication information, and each piece of indication information is used to indicate the at least one transmit beam.

For steps S502 to S505, refer to steps S202 to S205. Certainly, this is not limited in this application.

For explanations of related content in this embodiment, refer to the foregoing descriptions, and details are not described herein again.

With reference to the beam alignment and the DCI transmission method shown in FIG. 3, the indication information in this embodiment may be existing configuration information of a transmit beam configured by the network device and subsequently used to send DCI to the terminal. In this case, the transmit beam in the transmit beam set is a transmit beam that actually carries corresponding DCI. In addition, the indication information in this embodiment may be existing indication information that is of a plurality of transmit beams configured for carrying reference signals and that is sent during a beam sweeping procedure. Certainly, this is not limited herein.

### Embodiment 3

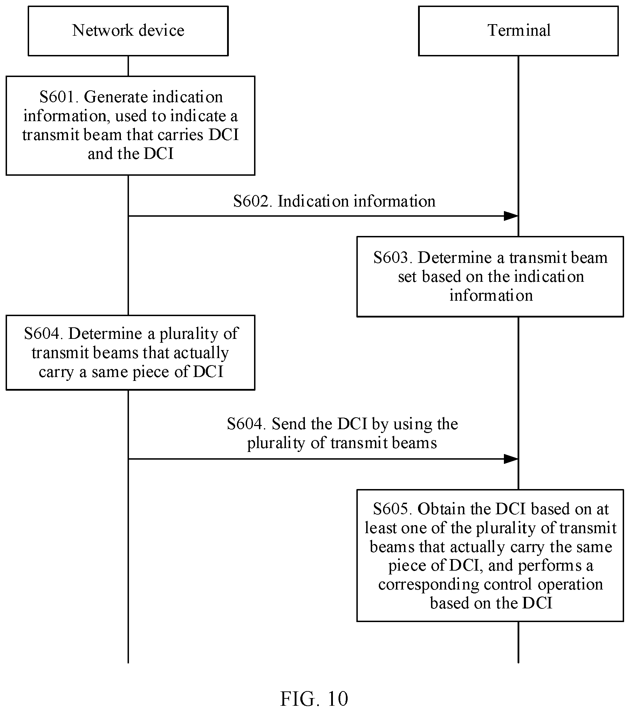

FIG. 10 is a schematic diagram of another DCI transmission method according to this application. Details are as follows:

S601. A network device generates indication information, where the indication information is used to indicate a transmit beam that carries DCI and the DCI, and the indication information may include beam indication information of the transmit beam that carries the DCI, and identifier information of the DCI. A specific implementation of the identifier information of the DCI is not limited in this application.

The network device may be any network device in a non-coordinated scenario, or may be any network device in a coordinated scenario. The transmit beam may be a transmit beam of one or more network devices. When the transmit beam is a transmit beam of one network device, the DCI is DCI of the network device. When the transmit beam is a transmit beam of a plurality of network devices, the DCI is DCI of the plurality of network devices.

For example, in the coordinated scenario, when the network device is a serving network device, the transmit beam may be a transmit beam that is of one or more network devices (including the serving network device and/or a non-serving network device) and that carries one or more pieces of DCI. When the network device is a non-serving network device, the transmit beam may be a transmit beam that is of the non-serving network device and that carries one or more pieces of DCI.

For steps S602 to S605, refer to steps S202 to S205. Certainly, this is not limited in this application.

It should be noted that, in this embodiment, the identifier information of the DCI carried in the transmit beam is indicated, to indicate which transmit beams are used to send which pieces of DCI. This may be considered as indicating which beams belong to a same transmit beam set. For related descriptions of the transmit beam set and explanations of other related content, refer to the foregoing descriptions, and details are not described herein again.

The technical solution shown in FIG. 10 provided in this application is described below by using an example with reference to the beam alignment and the DCI transmission method shown in FIG. 3. For example, a network device 1 and a network device 2 cooperatively serve a same terminal. A technical solution provided in this embodiment may be shown in FIG. 11. Details are as follows:

For steps S701 and S702, refer to steps S301 and S302. Certainly, this is not limited in this application.

S703. The network device 1 sends configuration information 1 to the terminal, where the configuration information 1 is used to indicate DCI 1 and a transmit beam subsequently used by the network device 1 to send the DCI 1 to the terminal, that is, a transmit beam that actually carries the DCI 1; the network device 2 sends configuration information 2 to the terminal, where the configuration information 2 is used to indicate DCI 2 and a transmit beam subsequently used by the network device 2 to send the DCI 2 to the terminal, that is, a transmit beam that actually carries the DCI 1; and the terminal receives the configuration information 1 and the configuration information 2.

Configuration information may include beam indication information of a transmit beam that actually carries corresponding DCI, and identifier information of the corresponding DCI. For example, a format of the configuration information 1 and the configuration information 2 is shown in Table 6.

**Table 6**

| | |
|---|---|
| Configuration information 1 | {transmit beam 11, identifier information of the DCI 1} |
| | {transmit beam 12, identifier information of the DCI 1} |
| | {transmit beam 13, identifier information of the DCI 1} |
| Configuration information 2 | {transmit beam 21, identifier information of the DCI 2} |
| | {transmit beam 22, identifier information of the DCI 2} |

For steps S704 and S705, refer to steps S305 and S306. Certainly, this is not limited in this application.

It should be noted that in this embodiment, a set including a transmit beam indicated in beam indication information that is carried in same configuration information as the identifier information of the DCI 1 may be referred to as a transmit beam set 1, and a set including a transmit beam indicated in beam indication information that is carried in the same configuration information as the identifier information of the DCI 2 is referred to as a transmit beam set 2. In another implementation, the indication information in this embodiment may be existing indication information that is of a plurality of transmit beams configured for carrying reference signals and that is sent during a beam sweeping procedure. Specifically, the indication information of the plurality of transmit beams configured for carrying the reference signals may carry corresponding identifier information of DCI. Certainly, this is not limited herein.

### Embodiment 4

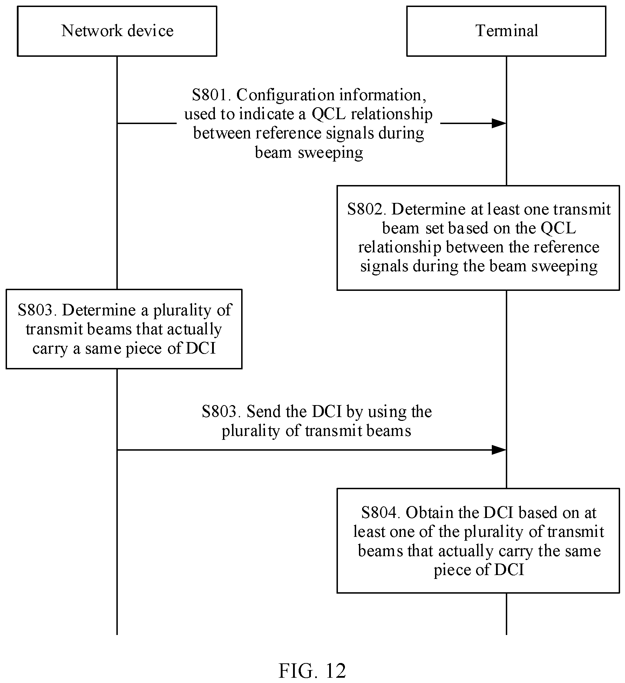

FIG. 12 is a schematic diagram of another DCI transmission method according to this application. Details are as follows:

S801. A network device sends configuration information to a terminal, where the configuration information is used to indicate a QCL relationship between reference signals during beam sweeping, and the terminal receives the configuration information. For a specific implementation of the step, refer to the prior art.

S802. The terminal determines at least one transmit beam set based on the QCL relationship between reference signals during the beam sweeping, where transmit beams carrying reference signals that meet the QCL relationship belong to a same transmit beam set, and a transmit beam in each transmit beam set is used to carry a same piece of DCI, transmit beams in different transmit beam sets are used to carry different pieces of DCI, and each transmit beam set includes at least one transmit beam.

QCL is used to indicate that a plurality of resources have one or more same or similar communication features. Different network devices usually have different large-scale channel information. Based on this, a relationship between reference signals sent by a same network device may be described as a QCL relationship, and a relationship between reference signals sent by different network devices may be described as a non-QCL relationship. In a beam alignment procedure, the terminal may record the QCL relationship between reference signals that is received during the beam sweeping, to learn which transmit beams belong to a same transmit beam set. The transmit beams carrying the reference signals that meet the QCL relationship belong to the same transmit beam set. A specific manner of learning, by the terminal, whether the reference signals are the QCL relationship during the beam sweeping is not limited in this application. For details, refer to the prior art.

For steps S803 and S804, refer to steps S204 and S205. Certainly, this is not limited in this application.

### Embodiment 5

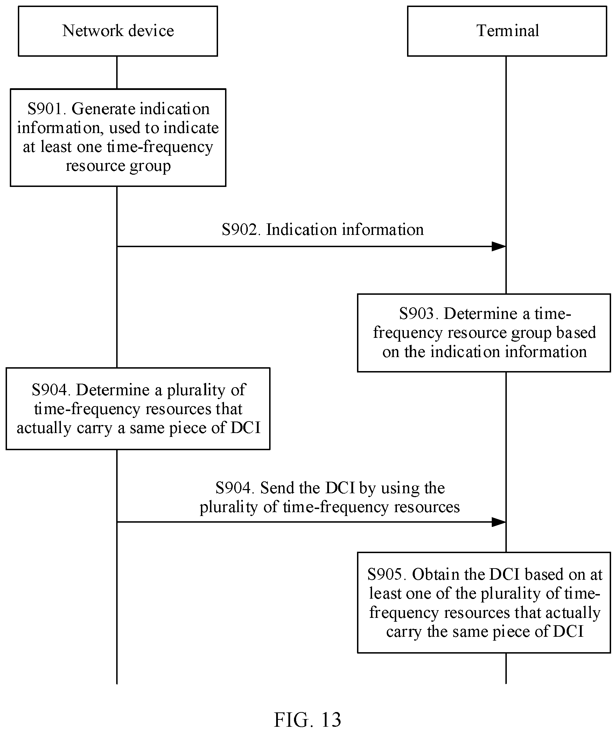

FIG. 13 is a schematic diagram of another DCI transmission method according to this application. Details are as follows:

S901. A network device generates indication information, where the indication information is used to indicate at least one time-frequency resource group, each time-frequency resource group is used to carry a same piece of DCI, different time-frequency resource groups are used to carry different pieces of DCI, a time-frequency resource group is some time-frequency resources for transmitting DCI to a same terminal, and time-frequency resources included in different time-frequency resource groups do not overlap with each other.

The network device may be any network device in a non-coordinated scenario, or may be any network device in a coordinated scenario. Each network device may correspond to the at least one time-frequency resource group, and the time-frequency resource group corresponding to each network device is used to carry DCI of the network device.

The indication information generated by any network device may be used to indicate at least one time-frequency resource group of the network device, or may be used to indicate at least one time-frequency resource group of another network device. For example, in the coordinated scenario, when the network device is a serving network device, the at least one time-frequency resource group may be a time-frequency resource group of one or more network devices (including the serving network device and/or a non-serving network device). When the network device is a non-serving network device, the at least one transmit beam set may be the at least one time-frequency resource group of the non-serving network device. Certainly, this is not limited in this application.

S902. The network device sends the indication information, and the terminal receives the indication information.

S903. The terminal determines the time-frequency resource group based on the indication information.

Steps S901 to S903 may be considered as a procedure of configuring related information of DCI.

S904. The network device determines a plurality of time-frequency resources that actually carry a same piece of DCI, and sends the DCI by using the plurality of time-frequency resources, where the plurality of time-frequency resources that actually carry the same piece of DCI are selected from a same time-frequency resource group. Optionally, the plurality of time-frequency resources may be some or all time-frequency resources in the time-frequency resource group.

S905. The terminal obtains the DCI based on at least one of the plurality of time-frequency resources that actually carry the same piece of DCI, and performs a corresponding control operation based on the DCI.

Steps S904 and S905 may be considered as a procedure of transmitting the DCI.

For example, step S905 may be implemented in, but not limited to, the following manner:

Manner 1: Decode information obtained by monitoring a transmit beam on any one of the plurality of time-frequency resources that actually carry the same piece of DCI, to obtain the DCI. Optionally, if the terminal succeeds in decoding the information obtained by monitoring the transmit beam on the any one of the plurality of time-frequency resources that actually carry the DCI, the terminal stops monitoring a transmit beam on another time-frequency resource in the time-frequency resource group. This can reduce blind detection complexity for the terminal.

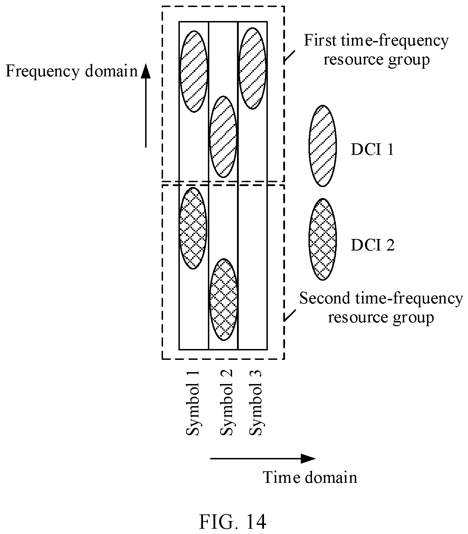

The correspondence between a transmit beam and a symbol shown in Table 1 is used as an example. In this manner, the DCI 1 may be set to be carried on a time-frequency resource group 1, and the DCI 2 may be set to be carried on a time-frequency resource group 2. FIG. 14 is a schematic diagram of a time-frequency resource location at which DCI is located in this example. In this example, the terminal may monitor the transmit beams 11, 12, and 13 on a time-frequency resource group 1. Specifically, the terminal monitors the transmit beam 11 on a time-frequency resource that belongs to the time-frequency resource group 1 and that corresponds to the symbol 1. If the terminal succeeds in decoding the information obtained by monitoring the transmit beam 11, the terminal stops monitoring the transmit beams 12 and 13 on the time-frequency resource group 1. Otherwise, the terminal monitors the transmit beam 12 on a time-frequency resource that belongs to the time-frequency resource group 1 and that corresponds to the symbol 2. Likewise, whether the terminal monitors the transmit beam 13 and how the terminal monitors the transmit beam on the time-frequency resource group 2 may be learned. Details are not described herein again. In the example of the correspondence between a transmit beam and a symbol shown in Table 2, a principle of monitoring the transmit beam is similar to that in the example shown in Table 1. Details are not described herein again.

The indication information may include information indicating which time-frequency resources belong to a same time-frequency resource group. For example, based on FIG. 14, the indication information may include but is not limited to: a subcarrier number range with which the time-frequency resource group 1 falls, a subcarrier number range with which the time-frequency resource group 2 falls, and the like.

Manner 2: Decode information obtained by monitoring a transmit beam on a plurality of time-frequency resources of the plurality of time-frequency resources that actually carry the same piece of DCI, to obtain the DCI. This can improve decoding accuracy of the terminal.

The method in this embodiment is similar to the method provided in Embodiment 1. Therefore, for a specific implementation and the like in this embodiment, refer to Embodiment 1. Details are not described herein again. The indication information may be existing prior-art signaling for configuring a time-frequency resource occupied by a reference signal, or may be a new piece of signaling. In this embodiment, the network device indicates, to the terminal in a signaling indication manner, the time-frequency resource group that carries the same piece of DCI. In a specific implementation, the network device may set, by using a protocol, the time-frequency resource group that carries the same piece of DCI.

In this embodiment, the same piece of DCI is carried on a same time-frequency resource group, and different pieces of DCI are carried on different time-frequency resource groups. In this way, if the terminal successfully decodes information detected on a time-frequency resource group, the terminal may stop monitoring on the time-frequency resource group. Compared with the prior art, this can reduce blind detection complexity.

It should be noted that, for explanations of related content in any one of Embodiment 2 to Embodiment 5, refer to Embodiment 1.

The solutions provided in the embodiments of this application are mainly described from a perspective of interaction between network elements. It should be understood that each network element is, for example, a network device or a terminal. To implement the foregoing functions, corresponding hardware structures and/or software modules for performing the functions are included. A person of ordinary skill in the art should easily be aware that, in combination with the examples described in the embodiments disclosed in this specification, units, algorithm steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, functional modules of the network device or the terminal may be divided based on the foregoing method example. For example, each function module may be divided according to corresponding functions, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used. The following describes an example in which each function module is obtained through division based on each corresponding function.

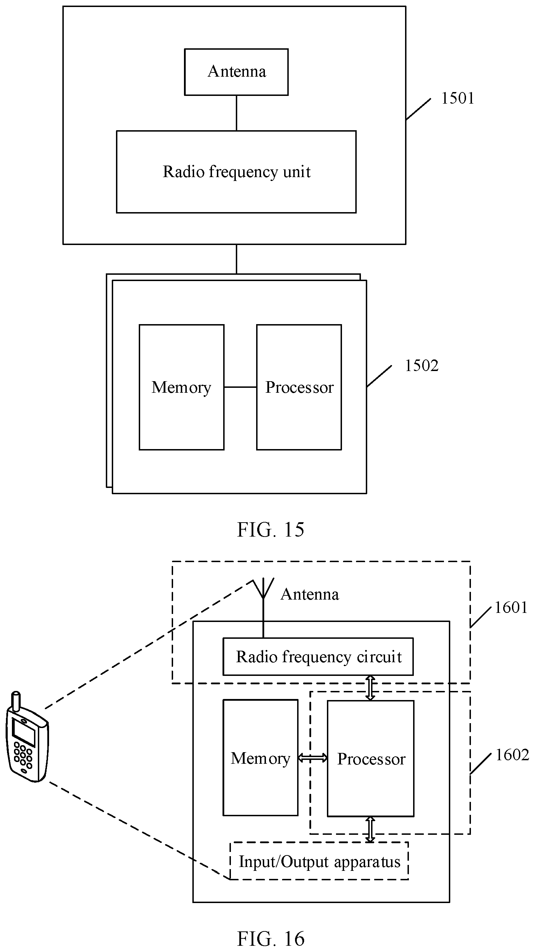

Embodiments of this application further provides a network device, for example, a base station. FIG. 15 is a simplified schematic structural diagram of a base station. The base station includes a part 1501 and a part 1502. The part 1501 is mainly configured to: send and receive a radio frequency signal, and convert the radio frequency signal and a baseband signal. The part 1502 is mainly configured to: perform baseband processing, control the base station, and the like. The part 1501 may be usually referred to as a transceiver unit, a transceiver, a transceiver circuit, a transceiver, or the like. The part 1502 is usually a control center of the base station, or may be usually referred to as a processing unit, configured to control the base station to perform the steps performed by the base station in FIG. 15. For details, refer to descriptions of the foregoing related parts.

The transceiver unit in the part 1501 may also be referred to as a transceiver, a transceiver, or the like, and includes an antenna and a radio frequency unit. The radio frequency unit is mainly configured to perform radio frequency processing. Optionally, a component that is in the part 1501 and that is configured to implement a receiving function may be considered as a receiving unit, and a component that is configured to implement a sending function may be considered as a sending unit. That is, the part 1501 includes the receiving unit and the sending unit. The receiving unit may also be referred to as a receiver, a receiver, a receiver circuit, or the like. The sending unit may be referred to as a transmitter, a transmitter, a transmitter circuit, or the like.

The part 1502 may include one or more boards. Each board may include one or more processors and one or more memories, and the processor is configured to read and execute a program in the memory, to implement a baseband processing function and control the base station. If there are a plurality of boards, the boards may be interconnected to improve a processing capability. In an optional implementation, a plurality of boards may share one or more processors, or a plurality of boards may share one or more memories, or a plurality of boards may simultaneously share one or more processors. The memory and the processor may be integrated together, or may be disposed independently. In some embodiments, the part 1501 and the part 1502 may be integrated together, or may be disposed independently. In addition, all functions of the part 1502 may be integrated into one chip for implementation. Alternatively, some functions may be integrated into one chip for implementation and some other functions are integrated into one or more other chips for implementation. This is not limited in this application.

For example, in an implementation, corresponding to the indication method provided above, the processing unit is configured to perform step S201 in FIG. 4, and/or other steps in this application. The transceiver unit is configured to perform the steps performed by the network device in step S202 in FIG. 4, and/or other steps in this application.

For example, in an implementation, corresponding to the indication method provided above, the processing unit is configured to perform step S501 in FIG. 9, and/or other steps in this application. The transceiver unit is configured to perform the steps performed by the network device in step S502 in FIG. 9, and/or other steps in this application.

For example, in an implementation, corresponding to the indication method provided above, the processing unit is configured to perform step S601 in FIG. 10, and/or other steps in this application. The transceiver unit is configured to perform the steps performed by the network device in step S602 in FIG. 10, and/or other steps in this application.

For example, in an implementation, corresponding to the indication method provided above, the processing unit is configured to perform step S901 in FIG. 13, and/or other steps in this application. The transceiver unit is configured to perform the steps performed by the network device in step S902 in FIG. 13, and/or other steps in this application.

For example, in an implementation, corresponding to the DCI sending method provided above, the processing unit is configured to perform the determining action in step S204 in FIG. 4, and/or other steps in this application. The transceiver unit is configured to perform the sending action performed by the network device in step S204 in FIG. 4, and/or other steps in this application.

For example, in an implementation, corresponding to the DCI sending method provided above, the processing unit is configured to perform the determining action in step S904 in FIG. 13, and/or other steps in this application. The transceiver unit is configured to perform the sending action performed by the network device in step S905 in FIG. 13, and/or other steps in this application.

Embodiments of this application further provide a terminal. FIG. 15 is a simplified schematic structural diagram of a terminal. For ease of understanding and convenience of figure illustration, an example in which the terminal is a mobile phone is used in FIG. 15. As shown in FIG. 15, the terminal includes a processor, a memory, a radio frequency circuit, an antenna, and an input/output apparatus. The processor is mainly configured to: process a communications protocol and communication data, and control the terminal to execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in an electromagnetic wave form. The input/output apparatus, such as a touchscreen, a display, or a keyboard, is mainly configured to receive data input by a user and output data to the user. It should be noted that some types of terminals may not have an input/output apparatus. The memory and the processor may be integrated together, or may be disposed independently.

When the processor needs to send data, the processor performs baseband processing on the to-be-sent data, and then outputs a baseband signal to the radio frequency circuit. After performing radio frequency processing on the baseband signal, the radio frequency circuit sends a radio frequency signal in an electromagnetic wave form by using the antenna. When data is sent to the terminal, the radio frequency circuit receives the radio frequency signal by using the antenna, converts the radio frequency signal into the baseband signal, and outputs the baseband signal to the processor. The processor converts the baseband signal into data, and processes the data. For ease of description, FIG. 15 shows merely one memory and one processor. In an actual terminal product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, an antenna and a radio frequency circuit that have receiving and sending functions may be considered as a transceiver unit of the terminal, and a processor that has a processing function may be considered as a processing unit of the terminal. As shown in FIG. 16, the terminal includes a transceiver unit 1601 and a processing unit 1602. The transceiver unit may also be referred to as a transceiver (including a transmitter and/or a receiver), a transceiver, a transceiver apparatus, or the like. The processing unit may also be referred to as a processor, a processing board, a processing module, a processing apparatus, or the like. Optionally, a component that is in the transceiver unit 1601 and that is configured to implement a receiving function may be considered as a receiving unit, and a component that is in the transceiver unit 1601 and that is configured to implement a sending function may be considered as a sending unit. That is, the transceiver unit 1601 includes the receiving unit and the sending unit. The transceiver unit sometimes may also be referred to as a transceiver, a transceiver, a transceiver circuit, or the like. The receiving unit sometimes may also be referred to as a receiver, a receiver, a receiving circuit, or the like. The sending unit sometimes may also be referred to as a transmitter, a transmitter, a transmitter circuit, or the like. In some embodiments, the transceiver unit 1601 and the processing unit 1602 may be integrated together, or may be disposed independently. In addition, all functions of the processing unit 1602 may be integrated into one chip for implementation. Alternatively, some functions may be integrated into one chip for implementation and some other functions are integrated into one or more other chips for implementation. This is not limited in this application.

For example, in an implementation, based on the information determining method provided above, the transceiver unit 1601 is configured to perform the steps performed by the terminal in step S202 in FIG. 4, and/or other steps in this application. The processing unit 1602 is configured to perform step S203 in FIG. 4, and/or other steps in this application.

For example, in an implementation, based on the information determining method provided above, the transceiver unit 1601 is configured to perform the steps performed by the network terminal in step S502 in FIG. 9 and/or other steps in this application. The processing unit 1602 is configured to perform step S503 in FIG. 9, and/or other steps in this application.

For example, in an implementation, based on the information determining method provided above, the transceiver unit 1601 is configured to perform the steps performed by the terminal in step S602 in FIG. 10, and/or other steps in this application. The processing unit 1602 is configured to perform step S603 in FIG. 10 and/or other steps in this application.

For example, in an implementation, based on the information determining method provided above, the transceiver unit 1601 is configured to perform the steps performed by the terminal in step S801 in FIG. 12, and/or other steps in this application. The processing unit 1602 is configured to perform step S802 in FIG. 12, and/or other steps in this application.

For example, in an implementation, based on the information determining method provided above, the transceiver unit 1601 is configured to perform the steps performed by the terminal in step S902 in FIG. 13, and/or other steps in this application. The processing unit 1602 is configured to perform step S903 in FIG. 13, and/or other steps in this application.

For example, in an implementation, based on the information determining method provided above, the transceiver unit 1601 is configured to perform the steps performed by the terminal in step S204 in FIG. 4, and/or other steps in this application. The processing unit 1602 is configured to perform step S205 in FIG. 4, and/or other steps in this application.

For example, in an implementation, based on the information determining method provided above, the transceiver unit 1601 is configured to perform the steps performed by the terminal in step S904 in FIG. 13, and/or other steps in this application. The processing unit 1602 is configured to perform step S905 in FIG. 13, and/or other steps in this application.

For explanations and beneficial effects of related content in any one of the foregoing provided network devices and terminals, refer to the corresponding method embodiment provided above. Details are not described herein again.

This application further provides a computer program product. When the computer program product is run on a computer, the computer is enabled to perform any method provided above. This application further provides a communications chip. The communications chip stores an instruction, and when the instruction is run on a network device or a terminal, the network device or the terminal is enabled to perform the methods in the foregoing aspects.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to specific features and the embodiments thereof, it is clearly that various modifications and combinations may be made to this application without departing from the spirit and scope of this application. Correspondingly, the specification and accompanying drawings are merely example description of this application defined by the accompanying claims, and is considered as any of or all modifications, variations, combinations or equivalents that cover the scope of this application. Definitely, a person skilled in the art can make various modifications and variations to this application without departing from the spirit and scope of this application. This application is intended to cover these modifications and variations of this application provided that the modifications and variations fall within the scope of protection defined by the following claims and their equivalent technologies.

## Claims

1. An indication method, comprising:
generating indication information, wherein the indication information is used to indicate a transmit beam set, and a transmit beam in the transmit beam set is used to carry a same piece of downlink control information DCI; and
sending the indication information.

2. An indication method, comprising:
generating indication information, wherein the indication information is used to indicate a transmit beam that carries downlink control information DCI, the transmit beam indicated in the indication information belongs to at least one transmit beam set, and a transmit beam in each transmit beam set is used to carry a same piece of DCI; and
sending the indication information.

3. An indication method, comprising:
generating indication information, wherein the indication information is used to indicate a transmit beam that carries downlink control information DCI and the DCI; and
sending the indication information.

4. An indication method, comprising:
generating indication information, wherein the indication information is used to indicate a time-frequency resource group, the time-frequency resource group is used to carry a same piece of downlink control information DCI, and time-frequency resources comprised in different time-frequency resource groups do not overlap with each other; and
sending the indication information.

5. An information determining method, comprising:
receiving indication information, wherein the indication information is used to indicate a transmit beam set, and a transmit beam in the transmit beam set is used to carry a same piece of DCI; and
determining the transmit beam set based on the indication information.

6. An information determining method, comprising:
receiving indication information, wherein the indication information is used to indicate a transmit beam that carries downlink control information DCI, the transmit beam indicated in the indication information belongs to at least one transmit beam set, and a transmit beam in each transmit beam set is used to carry a same piece of DCI; and
determining the transmit beam set based on the indication information.

7. An information determining method, comprising:
receiving indication information, wherein the indication information is used to indicate a transmit beam that carries downlink control information DCI and the DCI; and
determining, based on the indication information, the transmit beam that carries the DCI.

8. An information determining method, comprising:
receiving indication information, wherein the indication information is used to indicate a time-frequency resource group, the time-frequency resource group is used to carry a same piece of DCI, and time-frequency resources comprised in different time-frequency resource groups do not overlap with each other; and
determining the time-frequency resource group based on the indication information.

9. An information determining method, comprising:
determining a quasi co-location QCL relationship between reference signals during beam sweeping; and
determining a transmit beam set based on the QCL relationship between reference signals during the beam sweeping, wherein transmit beams carrying reference signals that meet the QCL relationship belong to a same transmit beam set, and a transmit beam in each transmit beam set is used to carry a same piece of downlink control information DCI.

10. An indication apparatus, comprising:
a processing unit, configured to generate indication information, wherein the indication information is used to indicate a transmit beam set, and a transmit beam in the transmit beam set is used to carry a same piece of downlink control information DCI; and
a transceiver unit, configured to send the indication information.

11. An indication apparatus, comprising:
a processing unit, configured to generate indication information, wherein the indication information is used to indicate a transmit beam that carries downlink control information DCI, the transmit beam indicated in the indication information belongs to at least one transmit beam set, and a transmit beam in each transmit beam set is used to carry a same piece of DCI; and
a transceiver unit, configured to send the indication information.

12. An indication apparatus, comprising:
a processing unit, configured to generate indication information, wherein the indication information is used to indicate a transmit beam that carries downlink control information DCI and the DCI; and
a transceiver unit, configured to send the indication information.

13. An indication apparatus, comprising:
a processing unit, configured to generate indication information, wherein the indication information is used to indicate a time-frequency resource group, the time-frequency resource group is used to carry a same piece of downlink control information DCI, and time-frequency resources comprised in different time-frequency resource groups do not overlap with each other; and
a transceiver unit, configured to send the indication information.

14. An information determining apparatus, comprising:
a transceiver unit, configured to receive indication information, wherein the indication information is used to indicate a transmit beam set, and a transmit beam in the transmit beam set is used to carry a same piece of downlink control information DCI; and
a processing unit, configured to determine the transmit beam set based on the indication information.

15. An information determining apparatus, comprising:
a transceiver unit, configured to receive indication information, wherein the indication information is used to indicate a transmit beam that carries downlink control information DCI, the transmit beam indicated in the indication information belongs to at least one transmit beam set, and a transmit beam in each transmit beam set is used to carry a same piece of DCI; and
a processing unit, configured to determine the transmit beam set based on the indication information.

16. An information determining apparatus, comprising:
a transceiver unit, configured to receive indication information, wherein the indication information is used to indicate a transmit beam that carries downlink control information DCI and the DCI; and
a processing unit, configured to determine, based on the indication information, the transmit beam that carries the DCI.

17. An information determining apparatus, comprising:
a transceiver unit, configured to receive indication information, wherein the indication information is used to indicate a time-frequency resource group, the time-frequency resource group is used to carry a same piece of DCI, and time-frequency resources comprised in different time-frequency resource groups do not overlap with each other; and
a processing unit, configured to determine the time-frequency resource group based on the indication information.

18. An information determining apparatus, comprising a processing unit, configured to: determine a quasi co-location QCL relationship between reference signals during beam sweeping, and determine a transmit beam set based on the QCL relationship between reference signals during the beam sweeping, wherein transmit beams carrying reference signals that meet the QCL relationship belong to a same transmit beam set, and a transmit beam in each transmit beam set is used to carry a same piece of downlink control information DCI.
